# EUROPÄISCHE PATENTANMELDUNG

(11) **EP 3 984 687 A1**
(43) Veröffentlichungstag der Anmeldung: **20.04.2022**
(21) Anmeldenummer: 20202234.9
(22) Anmeldetag: 16.10.2020
(51) Int. Cl.: B23K 26/042, B23K 26/14, B23K 26/38, B23K 10/00

(54) **STRAHLBEARBEITUNGSKOPF UND VERFAHREN ZUR STRAHLBEARBEITUNG**

(71) Anmelder: Bystronic Laser AG, 3362 Niederönz (CH)
(72) Erfinder: Fahrni, Christoph, 3363 Oberönz (CH); Kaltenbach, Stefan, 4532 Feldbrunnen (CH); Lüdi, Andreas, 3400 Burgdorf (CH); Haas, Titus, 4800 Zofingen (CH)
(74) Vertreter: Patentanwälte Geyer, Fehners & Partner mbB

(57) **Zusammenfassung**

Es wird ein Strahlbearbeitungskopf (10; 100; 200) zum Strahlschneiden eines Werkstücks bereitgestellt, mit einer Schnittstelle (12) für eine Energiestrahlquelle (14; 14, 201) zum Erzeugen eines fokussierten Bearbeitungsenergiestrahls (15; 206), ausgewählt aus einer Teilchenstrahlquelle, einer Brennfluidstrahlquelle, einer Plasmastrahlquelle und/oder einer Quelle für elektromagnetische Strahlung; mit einer von einem Öffnungsrand (18) begrenzten Austrittsöffnung (16) für den Bearbeitungsenergiestrahl; mit einer optischen Detektoreinheit (19) zum Aufnehmen mindestens eines Bildes einer vom Werkstück (11) durch die Austrittsöffnung in den Strahlbearbeitungskopf (10; 100; 200) emittierten elektromagnetischen Strahlung (17), die in dem Werkstück vom Bearbeitungsenergiestrahl induziert wird; und mit einer mit der optischen Detektoreinheit datenleitend verbundenen Überwachungseinheit (30) zum Überwachen einer Positionsbeziehung zwischen einem Zentrum der emittierten elektromagnetischen Strahlung und der Austrittsöffnung, wobei die Überwachungseinheit (30) aufweist: ein erstes Ermittlungsmodul zum Ermitteln mindestens einer Position (180; 182) der Austrittsöffnung in dem mindestens einen Bild; ein zweites Ermittlungsmodul zum Ermitteln mindestens einer Position (170) des Zentrums der emittierten elektromagnetischen Strahlung in dem mindestens einen Bild; und ein drittes Ermittlungsmodul zum Ermitteln der Positionsbeziehung zwischen der mindestens einen Position (170) des Zentrums der emittierten elektromagnetischen Strahlung und der mindestens einen Position (180; 182) der Austrittsöffnung (16). Es werden ferner eine Strahlbearbeitungsvorrichtung und ein Verfahren zum Strahlschneiden angegeben.

## Beschreibung

Die Erfindung betrifft einen Strahlbearbeitungskopf, eine Strahlbearbeitungsvorrichtung, eine Verwendung derselben und ein Verfahren, jeweils zum Strahlschneiden eines Werkstücks.

Es gibt Strahlbearbeitungssysteme, beispielsweise Plasmaschneidanlagen, Laserschneidanlagen und Bearbeitungsanlagen mit Teilchenstrahlern, bei denen ein Bearbeitungsenergiestrahl als energieinduzierender Strahl (im Folgenden auch Energieinduzierer genannt) zur Bearbeitung eines Werkstückes eingesetzt wird. Dabei wird im Werkstück Energie induziert, wie z.B. eine elektromagnetische Strahlung und/oder eine thermische Reaktion. Typischerweise ist es erwünscht, die Lage des energieinduzierenden Strahles innerhalb der Austrittsöffnung der Bearbeitungsvorrichtung zu kennen bzw. auszurichten. Bei einer Laserschneidmaschine wird als Energieinduzierer der Bearbeitungslaserstrahl eingesetzt und wobei die Austrittsöffnung die Düsenöffnung einer Schneidgasdüse ist. Bei Plasmaschneidanlagen ist der Energieinduzierer der Plasmastrom und die Austrittsöffnung ist auch hier die Gasdüsenöffnung. Bei Teilchenstrahlern (Ionenstrahler, Elektronenstrahler) dient ein Teilchenstrom als der Energieinduzierer und die zugehörige Austrittsöffnung ist eine Beschleunigungselektrode. Im Folgenden wird insbesondere auf Laser- und Plasmaschneidanlagen unter Bezugnahme auf die Lage des energieinduzierenden Strahls innerhalb der düsenförmigen Austrittsöffnung, auch Düse oder Gasdüse genannt, eingegangen. Analoges gilt für den energieinduzierenden Strahl und die Austrittsöffnung der Bearbeitungsanlagen mit Teilchenstrahlern.

Bei Schneidanlagen unter Einsatz von Gasen ist die relative Lage des Energieinduzierers zur Austrittsöffnung (Düse) relevant, da nebst dem Energieinduzierer auch ein Gasstrahl zur Werkstoffbearbeitung notwendig ist und dieser durch die Gasdüse geformt wird. Sind diese relativ zueinander ungünstig ausgerichtet, werden die Werkstoffbearbeitung, die Schneidqualität und/oder die Schneidgeschwindigkeit beeinträchtigt. Wenn z.B. im Falle einer Laserschneidanlage der Gasstrahl und der Energieinduzierer koaxial zueinander stehen, kann bei Einsatz von inertem Schneidgas (z.B. N₂) der Gasstrahl das durch den Energieinduzierer aufgeschmolzene Material optimal aus der Schnittfuge ausblasen. Es ist anzumerken, dass der Gasstrahl auch gleichzeitig der Energieinduzierer sein kann. Im Falle von reaktivem Schneidgas (z.B. O₂) wird das Gas zwecks Oxidation optimal an die Stelle der Zündung durch den Energieinduzierer gebracht. Zusätzlich ist eine koaxiale Führung der beiden Strahlen, bzw. des einen Strahls (Energieinduzierer und Gasstrahl) auch bei einem richtungsunabhängigen Prozess erwünscht. Wenn die beiden Strahlen gut übereinanderliegen, wird die Schneidanlage in alle Schneidrichtungen gleich gut schneiden. Es gibt auch Bearbeitungsprozesse, bei welchen ein (meistens paralleler) Versatz der beiden Strahlen gewollt ist. Dabei ist es günstig, den Versatz des Energieinduziererstrahls und des Gasstrahls zu kennen und einstellen zu können.

Bei Plasmaschneidanlagen mit einem Plasmastrahl als Energieinduzierer kann die Lage bzw. Richtung des Plasmastrahles durch die Lage und Ausrichtung einer Plasmadüsenelektrode der Austrittöffnung bestimmt werden. Bei Laserschneidanlagen mit einem Laserstrahl als Energieinduzierer wird die Lage bzw. Richtung des Laserstrahles durch die verschiedenen optischen Elemente wie Faseraustritt, Umlenkspiegel, und Linsen bestimmt. Die Lage bzw. Richtung eines Gasstrahles wird im Wesentlichen durch die Lage und Ausrichtung der Düse bestimmt. Soll der Laserstrahl koaxial zum Gasstrahl ausgerichtet sein, ist es erwünscht, den Energieinduzierer möglichst mittig, d.h. durch das Zentrum der Austritts- bzw. Düsenöffnung zu leiten. Im Bereich der Laserschneidsysteme sind verschiedene Systeme bekannt, um die Düsenzentrierung, d.h. die Zentrierung des Laserstrahls in der Düse, vor oder nach dem Schneiden zu überprüfen. Dies kann "offline" mittels Docking-Stationen erfolgen, d.h. mit Stationen, die ausserhalb des Bearbeitungsbereiches des Schneidsystems vorgesehen sind, wie z.B. in EP1967316B1, JP2018015808A oder US2018328725A. Dabei wird zur Bestimmung der Mitte des Laserstrahles der Arbeitslaserstrahl- oder ein Hilfslaserstrahl beobachtet. Ein anderer Offline-Ansatz ist in JP2003225787A beschrieben, wobei ein Loch in ein Blech geschossen wird und so die Lage des Arbeitslasers bestimmt wird.

Während des Werkstückbearbeitungsprozesses ist typischerweise eine kontinuierliche Überprüfung der Zentriertheit der Austrittsöffnung/Düse und des Energieinduzierers (auch Düsenzentrierung genannt) kaum möglich. Somit werden Verschiebungen der Düse, die während eines Schneidprozesses aufgrund z.B. kleinerer Berührungen sowie Zusammenstössen mit aufstehenden Werkstückteilen entstehen, nicht bemerkt. Daher kann es vorkommen, dass mit de-justierter Düsenlage geschnitten und eine ungenügende Schneidqualität produziert wird.

Ein bekannter Ansatz zur Überprüfung der Düsenzentrierung ist in EP2673108B1 (bzw. DE102011003717) beschrieben. Hierfür wird eine koaxiale Kamera eingesetzt, die entlang des Bearbeitungslaserstrahles durch die Düse auf das Werkstück ausgerichtet ist. Dabei wird während des Schneidens via Kameraaufnahmen die Mitte der Schnittfuge ermittelt und diese wird mit der ebenfalls via koaxialer Kamera ermittelten Mitte der Düse verglichen. Dieses Vorgehen beruht auf der Annahme, dass die Mitte des Laserstrahles mit der Mitte der Schnittfuge zusammenfällt. Wurde in mindestens zwei unterschiedliche (möglichst senkrecht zueinanderstehenden) Richtungen geschnitten, kann die Mitte des Laserstrahles in der zur Laserstrahlausbreitung senkrechten Ebene bestimmt und mit der Mitte der Düsenöffnung verglichen werden. Berührt die Düsenöffnung während eines Geradeausschnittes z.B. ein bereits geschnittenes aufstehenden Werkstückteil und wird dadurch die Düse leicht in der Schneidrichtung de-justiert, wird unmittelbar eine ungenügende Schneidqualität produziert. Die De-Justage der Düse kann aber erst bei einer Schneidrichtungsänderung bemerkt werden.

Ferner wird in EP2894004B1 vorgeschlagen, den am Werkstück während der Bearbeitung reflektierten Laserstrahl für eine Laserstrahllokalisierung mit einer koaxialen Kamera zu beobachten. Jedoch ist der Laserstrahl typischerweise während eines Schneidvorganges nicht sichtbar. Ferner funktioniert eine Laserstrahllokalisierung mittels dem am Werkstück reflektierten Laserstrahl nur dann fehlerfrei, wenn der Laserstrahl dort perfekt senkrecht reflektiert wird. D.h. das Werkstück muss exakt rechtwinklig zum Laserstrahl orientiert sein.

Aufgabe der Erfindung ist es, einen Strahlbearbeitungskopf, insbesondere einen Energiestrahlbearbeitungskopf, und ein Verfahren zum Strahlschneiden, insbesondere zum Energiesstrahlschneiden, anzugeben, die eine aussagekräftige Überwachung der relativen Lagen des Bearbeitungsenergiestrahls und der Austrittöffnung zueinander ermöglichen.

Diese Aufgabe wird gelöst mit einem Strahlbearbeitungskopf nach Anspruch 1, einer Strahlbearbeitungsvorrichtung nach Anspruch 7, einer Verwendung nach Anspruch 8, einem Verfahren zum Strahlschneiden eines Werkstücks nach Anspruch 9, sowie einem Computerprogrammprodukt nach Anspruch 15 und einem Computerlesbaren Medium nach Anspruch 16.

Eine erste Ausführungsform der Erfindung betrifft einen Strahlbearbeitungskopf zum Strahlschneiden, insbesondere Energiestrahlschneiden, eines Werkstücks, mit einer Schnittstelle für eine Energiestrahlquelle zum Erzeugen eines fokussierten Bearbeitungsenergiestrahls, ausgewählt aus einer Teilchenstrahlquelle, einer Brennfluidstrahlquelle, einer Plasmastrahlquelle und/oder einer Quelle für elektromagnetische Strahlung; mit einer von einem Öffnungsrand begrenzten Austrittsöffnung für den Bearbeitungsenergiestrahl; mit einer optischen Detektoreinheit zum Aufnehmen mindestens eines Bildes einer vom Werkstück durch die Austrittsöffnung in den Strahlbearbeitungskopf emittierten elektromagnetischen Strahlung, die in dem Werkstück vom Bearbeitungsenergiestrahl induziert wird; und mit einer mit der optischen Detektoreinheit datenleitend verbundenen Überwachungseinheit zum Überwachen einer Positionsbeziehung zwischen einem Zentrum der emittierten elektromagnetischen Strahlung und der Austrittsöffnung, wobei die Überwachungseinheit aufweist: ein erstes Ermittlungsmodul zum Ermitteln mindestens einer Position der Austrittsöffnung in dem mindestens einen Bild; ein zweites Ermittlungsmodul zum Ermitteln mindestens einer Position des Zentrums der emittierten elektromagnetischen Strahlung in dem mindestens einen Bild; und ein drittes Ermittlungsmodul zum Ermitteln der Positionsbeziehung zwischen der mindestens einen Position des Zentrums der emittierten elektromagnetischen Strahlung und der mindestens einen Position der Austrittsöffnung.

Zur Überwachung der relativen Lage des Bearbeitungsenergiestrahls und der Austrittsöffnung zueinander wird mit dem Strahlbearbeitungskopf von Ausführungsformen nicht der Bearbeitungsenergiestrahl, sondern das Zentrum der vom Werkstück durch die Austrittsöffnung in den Strahlbearbeitungskopf emittierten elektromagnetischen Strahlung beobachtet, die vom Bearbeitungsenergiestrahl im Werkstück induziert wird. Mit anderen Worten, es wird mittelbar das energetisch relevante Zentrum des Bearbeitungsenergiestrahls beobachtet. Die Überwachung erfolgt also unter Beobachtung der Wirkung des Bearbeitungsenergiestrahls. Wird anhand der Überwachungsergebnisse eine Neueinstellung der relativen Lage des Bearbeitungsenergiestrahls und der Austrittsöffnung zueinander mit oder ohne erwünschten Versatz ausgeführt, auch Zentrierung des Bearbeitungsenergiestrahls und/oder der Austrittsöffnung genannt, erfolgt dies mittels einer sogenannten Wirkzentrierung. Es hat sich gezeigt, dass hierdurch eine genauere Zentrierung und ein viel präziserer Schnitt ermöglicht wird, als bei der bekannten Zentrierung der Strahlachse zur Austrittsöffnung bzw. zur Düsenöffnung. Der Strahlbearbeitungskopf ermöglicht zudem eine Überwachung der relativen Lage des Bearbeitungsenergiestrahls und der Austrittsöffnung zueinander nicht nur in eine Richtung, sondern in mehr als eine Richtung unabhängig von der Schneidrichtung. Ferner kann die Überwachung der Positionsbeziehung kontinuierlich oder diskontinuierlich und/oder während dem Strahlschneiden, insbesondere in Echt-Zeit, erfolgen. Die Überwachung und/oder eine evtl. nötige Neueinstellung der relativen Lage des Bearbeitungsenergiestrahls und der Austrittsöffnung zueinander erfolgt anhand der jeweiligen Positionen der emittierten elektromagnetischen Strahlung und der Austrittöffnung im aufgenommenen Bild. Die Überwachung und/oder die Neueinstellung der relativen Lage des Bearbeitungsenergiestrahls und der Austrittsöffnung zueinander können daher im Wesentlichen unabhängig von der Form, von Schwingungen oder von einer Streuung des Bearbeitungsenergiestrahls erfolgen.

Die Detektoreinrichtung kann an einer zweiten Schnittstelle des Strahlbearbeitungskopfs vorgesehen sein. Zumindest ein Teil der Einheiten des Strahlbearbeitungskopfes können mit einer computergestützten Steuereinheit des Strahlbearbeitungskopfes drahtgebunden oder drahtlos datenleitend verbunden sein. Die Überwachungseinheit kann ferner Teil der Steuereinheit sein. Das dritte Ermittlungsmodul kann ein Komparatormodul sein oder umfassen, das die ermittelten Positionen vergleicht. Das erste, zweite, und dritte Ermittlungsmodul können Computerprogrammmodule sein und/oder in beliebiger Kombination in einem Computerprogramm implementiert sein.

In dem Strahlbearbeitungskopf kann die Überwachungseinheit ein Kontrollmodul aufweisen zum Ausgeben mindestens eines Elements ausgewählt aus einem die ermittelte Positionsbeziehung anzeigenden Signal, insbesondere an eine Anzeigeeinheit; einem Signal, das eine von einer vorbestimmten Positionsbeziehung abweichende, ermittelte Positionsbeziehung anzeigt; einem Steuerbefehl, insbesondere an eine Steuereinheit, ausgewählt aus einem Befehl zum Fortsetzen der Bearbeitung und einem Befehl zum Beenden der Bearbeitung; und mindestens eines Positionierungsbefehls, insbesondere an eine Positionierungseinheit, zum Einstellen der Positionsbeziehung zwischen der mindestens einen Position des Zentrums der emittierten elektromagnetischen Strahlung und der mindestens einen Position der Austrittsöffnung auf eine vorbestimmte Positionsbeziehung. Die vorbestimmte Positionsbeziehung kann als konstant oder als variabel, z.B. in Abhängigkeit von einer Bearbeitungsvorgabe, vorgegeben sein, auch während eines Bearbeitungsvorgangs. In der vorbestimmten Positionsbeziehung kann ein erwünschter, konstanter oder variabler, paralleler oder nicht paralleler relativer Versatz des Bearbeitungsenergiestrahls und der Austrittsöffnung zueinander berücksichtigt sein. Alternativ kann ein erwünschter relativer Versatz des Bearbeitungsenergiestrahls und der Austrittsöffnung vom ersten oder zweiten Ermittlungsmodul nach dem Ermitteln der jeweiligen Positionen, z.B. zur betreffenden Position addiert, oder vom dritten Ermittlungsmodul bei dem Vergleichen berücksichtigt werden. Mit den vorgenannten Maßnahmen können die Überwachung und/oder die Neueinstellung der relativen Lage des Bearbeitungsenergiestrahls und der Austrittsöffnung zueinander auf unterschiedliche Weise realisiert werden. Dies ermöglicht ferner, einen Versatz des Bearbeitungsenergiestrahls und eines durch die Austrittsöffnung geleiteten Schneidgasstrahls zu überwachen und/oder einzustellen.

Ferner kann das Kontrollmodul zum Ausgeben eines Kalibrationsbefehls zum Kalibrieren des Abbildungsmaßstabs des mindestens einen Bildes ausgebildet sein. Als Abbildungsmaßstab wird allgemein das Verhältnis zwischen optischer Größe einer Abbildung eines Gegenstands, z.B. vorliegend der Größe der Austrittsöffnung im aufgenommenen Bild, und der tatsächlichen Größe des Gegenstands, z.B. vorliegend der Größe der Austrittöffnung, verstanden.

Im Strahlbearbeitungskopf kann das erste Ermittlungsmodul zum Ermitteln der mindestens einen Position der Austrittsöffnung in mindestens zwei Richtungen ausgebildet sein. Alternativ oder zusätzlich kann das erste Ermittlungsmodul zum Ermitteln mindestens eines Elements ausgewählt aus der mindestens einen Position des die Austrittsöffnung begrenzenden Öffnungsrands und der Position eines Zentrums der Austrittsöffnung ausgebildet sein.

Ferner kann im Strahlbearbeitungskopf das zweite Ermittlungsmodul zum Ermitteln der mindestens einen Position des Zentrums der emittierten elektromagnetischen Strahlung in mindestens zwei Richtungen ausgebildet sein, insbesondere in Querrichtung und Längsrichtung zur Schneidrichtung. Das zweite Ermittlungsmodul kann ferner ausgebildet sein zum Ermitteln der Position des Zentrums der emittierten Strahlung in Längsrichtung zur Schneidrichtung durch Abschätzung und/oder unter Einbeziehung einer Fehlertoleranz von 3 bis 10%, bevorzugt 4 bis 6%, und/oder durch Anwendung der Erste-Moment-Methode. Dies gilt insbesondere für den Fall eines aufgenommenen Bildes, das die emittierte Strahlung, z.B. aufgrund der Geschwindigkeit des Schneidprozesses und/oder eines Nachleuchtens im Werkstück und/oder einer geringen Kamerabildfrequenz der Detektoreinheit, in Schneidrichtung in die Länge gezogen darstellt. Das zweite Ermittlungsmodul kann ferner ausgebildet sein zum Ermitteln mindestens eines Elements ausgewählt aus der Position eines räumlichen Zentrums der emittierten Strahlung und der Position eines Zentrums der höchsten Energiedichte der emittierten Strahlung als die Position des Zentrums der emittierten elektromagnetischen Strahlung. Zur Ermittlung der Position des räumlichen Zentrums der emittierten Strahlung kann z.B. die Anzahl der Pixel eines mit der Detektoreinheit aufgenommenen digitalen Bildes als Einheit verwendet werden. Zur Ermittlung der Position eines Zentrums der höchsten Energiedichte kann z.B. das hellste Pixel oder eine Gruppe zusammenhängender Pixel mit der größten, insbesondere gemittelten, Helligkeit eines mit der Detektoreinheit aufgenommenen digitalen Bildes genutzt werden.

Der Strahlbearbeitungskopf kann versehen sein mit: einer an der Schnittstelle vorgesehenen Energiestrahlquelle zum Erzeugen eines fokussierten Bearbeitungsenergiestrahls; und/oder einer, insbesondere mit der Überwachungseinheit datenleitend verbundenen, Positionierungseinheit zum kontinuierlichen oder diskontinuierlichen Einstellen der Positionsbeziehung zwischen der mindestens einen Position des Zentrums der emittierten elektromagnetischen Strahlung und der mindestens einen Position der Austrittsöffnung, insbesondere auf eine vorbestimmte Positionsbeziehung; und/oder einer Beleuchtungseinheit zum kontinuierlichen, diskontinuierlichen, intermittierenden und/oder stroboskopischen Beleuchten des Werkstücks durch die Austrittsöffnung oder einer Schnittstelle für eine derartige Beleuchtungseinheit. In Ausführungsformen, in denen die Überwachungseinheit mit der Positionierungseinheit datenleitend verbunden ist, ist eine zusätzliche Docking-Station für eine Neueinstellung der relativen Lage des Bearbeitungsenergiestrahls und der Austrittsöffnung zueinander nicht erforderlich.

In dem Strahlbearbeitungskopf können die Austrittsöffnung und die optische Detektoreinheit koaxial angeordnet sein, insbesondere koaxial in Bezug auf eine Ausbreitungsrichtung des Bearbeitungsenergiestrahls durch die Austrittsöffnung. Ferner kann die optische Detektoreinheit zum Aufnehmen mindestens eines Bildes zumindest eines Teils einer vom Werkstück koaxial durch die Austrittsöffnung in den Strahlbearbeitungskopf emittierten elektromagnetischen Strahlung ausgebildet sein, insbesondere koaxial in Bezug auf die Ausbreitungsrichtung des Bearbeitungsenergiestrahls durch die Austrittsöffnung. Alternativ oder zusätzlich kann die Austrittsöffnung kreisförmig und/oder mit einen Durchmesser von 0,025 bis 10 mm, bevorzugt 0,6 bis 8 mm, mehr bevorzugt 0,8 bis 6 mm ausgebildet sein. Zudem kann das dritte Ermittlungsmodul und/oder das Kontrollmodul zum Korrigieren mindestens einer Perspektive des mindestens eines Bildes und/oder unterschiedlicher Perspektiven der mindestens einen Position der Austrittsöffnung und der mindestens einen Position des Zentrums der emittierten elektromagnetischen Strahlung ausgebildet sein.

Eine weitere Ausführungsform betrifft eine Strahlbearbeitungsvorrichtung zum Strahlschneiden eines Werkstücks, insbesondere zur Laserbearbeitung oder Plasmastrahlbearbeitung, mit einem Strahlbearbeitungskopf nach den vorstehenden Ausführungsformen oder Abwandlungen davon.

In einer anderen Ausführungsform ist eine Verwendung eines Strahlbearbeitungskopfes nach den vorstehenden Ausführungsformen oder Abwandlungen davon oder einer Strahlbearbeitungsvorrichtung nach der vorstehenden Ausführungsform zum Strahlschneiden, insbesondere zur Laserbearbeitung oder Plasmastrahlbearbeitung, eines Werkstücks angegeben.

Eine zusätzliche Ausführungsform betrifft ein Verfahren zum Strahlschneiden eines Werkstücks, insbesondere zur Laserstrahlbearbeitung oder Plasmastrahlbearbeitung, mit einem Strahlbearbeitungskopf nach den vorstehenden Ausführungsformen oder Abwandlungen davon oder einer Strahlbearbeitungsvorrichtung nach der vorstehenden Ausführungsform, mit den Schritten: Erzeugen eines Bearbeitungsenergiestrahls mit einer an der Schnittstelle des Strahlbearbeitungskopfes vorgesehenen Energiestrahlquelle zum Erzeugen eines fokussierten Bearbeitungsenergiestrahls, ausgewählt aus einer Teilchenstrahlquelle, einer Brennfluidstrahlquelle, einer Plasmastrahlquelle und/oder einer Quelle für elektromagnetische Strahlung; Bestrahlen eines Werkstücks mit dem Bearbeitungsenergiestrahl durch die Austrittsöffnung; Bearbeiten des Werkstücks mit dem Bearbeitungsenergiestrahl, wobei im Werkstück eine elektromagnetische Strahlung induziert wird, die zumindest teilweise koaxial zu dem Bearbeitungsenergiestrahl durch die Austrittsöffnung in den Strahlbearbeitungskopf emittiert wird; Aufnehmen mindestens eines Bildes zumindest eines Teils der vom Werkstück durch die Austrittsöffnung in den Strahlbearbeitungskopf emittierten elektromagnetischen Strahlung, die in dem Werkstück vom Bearbeitungsenergiestrahl induziert wird, mit der optischen Detektoreinheit des Strahlbearbeitungskopfes; und Überwachen einer Positionsbeziehung zwischen einem Zentrum der emittierten elektromagnetischen Strahlung und der Austrittsöffnung mit der Überwachungseinheit des Strahlbearbeitungskopfes, wobei das erste Ermittlungsmodul der Überwachungseinheit mindestens eine Position der Austrittsöffnung in dem mindestens einen Bild ermittelt, das zweite Ermittlungsmodul der Überwachungseinheit mindestens eine Position des Zentrums der emittierten elektromagnetischen Strahlung in dem mindestens einen Bild ermittelt, und das dritte Ermittlungsmodul der Überwachungseinheit die Positionsbeziehung zwischen der mindestens einen Position des Zentrums der emittierten elektromagnetischen Strahlung und der mindestens einen Position der Austrittsöffnung ermittelt.

In dem Verfahren kann das Kontrollmodul der Überwachungseinheit mindestens ein Element ausgeben ausgewählt aus einem die ermittelte Positionsbeziehung anzeigenden Signal, insbesondere an eine Anzeigeeinheit; einem Signal, das eine von einer vorbestimmten Positionsbeziehung abweichende, ermittelte Positionsbeziehung anzeigt; einem Steuerbefehl, insbesondere an eine Steuereinheit, ausgewählt aus einem Befehl zum Fortsetzen der Bearbeitung und einem Befehl zum Beenden der Bearbeitung; und mindestens einem Positionierungsbefehl, insbesondere an die Positionierungseinheit, zum Einstellen der Positionsbeziehung zwischen der mindestens einen Position des Zentrums der emittierten elektromagnetischen Strahlung und der mindestens einen Position der Austrittsöffnung auf eine vorbestimmte Positionsbeziehung. Ferner kann das Kontrollmodul einen Kalibrationsbefehl zum Kalibrieren des Abbildungsmaßstabs des mindestens einen Bildes ausgeben.

Bei dem Verfahren kann das erste Ermittlungsmodul die mindestens eine Position der Austrittsöffnung in mindestens zwei Richtungen ermitteln. Alternativ oder zusätzlich kann das erste Ermittlungsmodul mindestens ein Element ausgewählt aus der mindestens einen Position des die Austrittsöffnung begrenzenden Öffnungsrands und der Position eines Zentrums der Austrittsöffnung ermitteln.

In dem Verfahren kann das zweite Ermittlungsmodul die mindestens eine Position des Zentrums der emittierten elektromagnetischen Strahlung in mindestens zwei Richtungen ermitteln. Alternativ oder zusätzlich kann das zweite Ermittlungsmodul mindestens ein Element ausgewählt aus der Position eines räumlichen Zentrums der emittierten Strahlung und der Position eines Zentrums der höchsten Energiedichte der emittierten Strahlung als die Position des Zentrums der emittierten elektromagnetischen Strahlung ermitteln.

Das Verfahren kann ferner beinhalten: kontinuierliches oder diskontinuierliches Einstellen der Positionsbeziehung zwischen der mindestens einen Position des Zentrums der emittierten elektromagnetischen Strahlung und der mindestens einen Position der Austrittsöffnung, insbesondere auf eine vorbestimmte Positionsbeziehung, insbesondere mittels der Positionierungseinheit; und/oder Kalibrieren des Abbildungsmaßstabs des mindestens einen Bildes; und/oder Korrigieren mindestens einer Perspektive des mindestens eines Bildes und/oder unterschiedlicher Perspektiven der mindestens einen Position der Austrittsöffnung und der mindestens einen Position des Zentrums der emittierten elektromagnetischen Strahlung, insbesondere mittels dem dritten Ermittlungsmodul und/oder dem Kontrollmodul.

Bei dem Verfahren kann die optische Detektoreinheit mindestens ein Bild zumindest eines Teils einer vom Werkstück koaxial durch die Austrittsöffnung in den Strahlbearbeitungskopf emittierten elektromagnetischen Strahlung aufnehmen, insbesondere koaxial in Bezug auf die Ausbreitungsrichtung des Bearbeitungsenergiestrahls durch die Austrittsöffnung. Ferner kann das Werkstück durch die Austrittsöffnung koaxial oder nicht koaxial zu dem Bearbeitungsenergiestrahl kontinuierlich, diskontinuierlich und/oder stroboskopisch beleuchtet werden, insbesondere mit der Beleuchtungseinheit. Bei dem Verfahren können ferner zwei oder mehr Bilder alternierend, insbesondere periodisch alternierend, mit Beleuchtung und ohne Beleuchtung aufgenommen werden.

Eine andere Ausführungsform betrifft ein Computerprogrammprodukt, beinhaltend ein oder mehrere Programmmodule, die bewirken, dass der Strahlbearbeitungskopf nach den vorstehenden Ausführungsformen oder Abwandlungen davon oder die Strahlbearbeitungsvorrichtung nach der vorstehenden Ausführungsform Schritte des Verfahrens nach den vorstehenden Ausführungsformen oder Abwandlungen davon ausführt, insbesondere wenn die Programmmodule in einen Speicher der Überwachungseinheit geladen werden, insbesondere umfassend mindestens ein Element ausgewählt aus dem ersten Ermittlungsmodul, dem zweiten Ermittlungsmodul, dem dritten Ermittlungsmodul, dem Kontrollmodul und einer Kombination davon. Das heißt, es wird ein Computerprogrammprodukt oder Computerprogramm zum Ausführen des Verfahrens nach den vorstehenden Ausführungsformen oder Abwandlungen davon bereitgestellt.

Eine weitere Ausführungsform gibt ein computerlesbares Medium an, auf dem ein oder mehrere Programmmodule gespeichert sind, die von der Überwachungseinheit des Strahlbearbeitungskopfes nach den vorstehenden Ausführungsformen oder Abwandlungen davon oder der Strahlbearbeitungsvorrichtung nach der vorstehenden Ausführungsform lesbar und ausführbar sind, um Schritte des Verfahrens nach den vorstehenden Ausführungsformen oder Abwandlungen davon auszuführen, insbesondere wenn die Programmmodule in einen Speicher der Überwachungseinheit geladen werden, insbesondere mindestens ein Element ausgewählt aus dem ersten Ermittlungsmodul, dem zweiten Ermittlungsmodul, dem dritten Ermittlungsmodul, dem Kontrollmodul und einer Kombination davon. Das heißt, es kann ein computerlesbares Medium bereitgestellt sein, auf dem das Computerprogrammprodukt der vorstehenden Ausführungsform gespeichert ist.

Mit den Strahlbearbeitungsvorrichtungen, dem Computerprogrammprodukt und dem computerlesbaren Medium der vorstehenden Ausführungsformen können die gleichen Vorteile und Funktionen realisiert werden, wie mit den Ausführungsformen und Abwandlungen des Strahlbearbeitungskopfes, insbesondere mit gleichlautenden und/oder analogen Merkmalen.

Weitere Merkmale und Zweckmäßigkeiten ergeben sich aus der folgenden Beschreibung von Ausführungsbeispielen, den Figuren und den Unteransprüchen. Die vorstehend genannten und die nachstehend erläuterten Merkmale können nicht nur in den angegebenen Kombinationen, sondern auch in anderen Kombinationen oder in Alleinstellung einsetzbar sein, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch einen beispielhaften Laserschneidkopf 10 eines ersten Ausführungsbeispiels;
- Fig. 2a: schematisch eine Aufnahme einer Prozesszone eines Werkstücks durch die Austrittsöffnung des Laserschneidkopfs 10 mit Austrittsöffnung und mit der durch die Austrittsöffnung in den Laserschneidkopf emittierten elektromagnetischen Strahlung;
- Fig. 2b: eine Fig. 2a entsprechende Kameraaufnahme; und
- Fig. 3a: schematisch eine Aufnahme einer Prozesszone eines Werkstücks durch die Austrittsöffnung des Laserschneidkopfs 10 mit Austrittsöffnung und mit der durch die Austrittsöffnung in den Laserschneidkopf emittierten elektromagnetischen Strahlung;
- Fig. 3b: eine Fig. 3a entsprechende Kameraaufnahme;
- Fig. 4: schematisch einen beispielhaften Laserschneidkopf 100 eines zweiten Ausführungsbeispiels mit Beleuchtungseinheit;
- Fig. 5a: schematisch eine Aufnahme eines Werkstücks durch die Austrittsöffnung des Laserschneidkopfs 100 mit Beleuchtung;
- Fig. 5b: eine Fig. 5a entsprechende Kameraaufnahme;
- Fig. 6a: schematisch eine Aufnahme einer Prozesszone eines Werkstücks durch die Austrittsöffnung des Laserschneidkopfs 100 (links) und mit ermittelter Position der Austrittsöffnung und ermittelter Position der durch die Austrittsöffnung in den Laserschneidkopf emittierten elektromagnetischen Strahlung (rechts), jeweils mit Beleuchtung;
- Fig. 6b: eine Fig. 6a entsprechende Kameraaufnahme;
- Fig. 7a: schematisch Aufnahmen einer Prozesszone eines Werkstücks durch die Austrittsöffnung des Laserschneidkopfs 10 (links) und mit ermittelter Position der Austrittsöffnung und ermittelter Position der durch die Austrittsöffnung in den Laserschneidkopf emittierten elektromagnetischen Strahlung (rechts); obere Zeile: mit Beleuchtung, untere Zeile: ohne Beleuchtung;
- Fig. 7b: Fig. 7a entsprechende Kameraaufnahmen; und
- Fig. 8: schematisch einen Plasmaschneidkopf 200 eines dritten Ausführungsbeispiels.

Die folgenden Ausführungsbeispiele werden anhand von Laserschneidköpfen und eines Plasmaschneidkopfs beschrieben, die Erfindung ist aber nicht darauf beschränkt. Mit den Begriffen "Position des Zentrums der emittierten elektromagnetischen Strahlung", "Position der Austrittsöffnung", "Position des Öffnungsrandes", "Position der Mitte der Austrittöffnung" und Abwandlungen davon ist die jeweilige Position im von der Detektoreinheit aufgenommenen mindestens einen Bild genannt, und kann auch als Bildposition bezeichnet werden. Im Folgenden gilt für die Begriffe "Zentrierung des Bearbeitungsenergiestrahls" und "Zentrierung der Austrittsöffnung" und Abwandlungen davon, dass eine Einstellung der relativen Lage des Bearbeitungsenergiestrahls und der Austrittsöffnung zueinander mit oder ohne erwünschten Versatz gemeint ist. Ferner wird der Begriff "emittierte elektromagnetische Strahlung" und Abwandlungen davon synonym bezeichnet als "emittierte Strahlung" mit entsprechenden Abwandlungen. Im Folgenden gilt für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

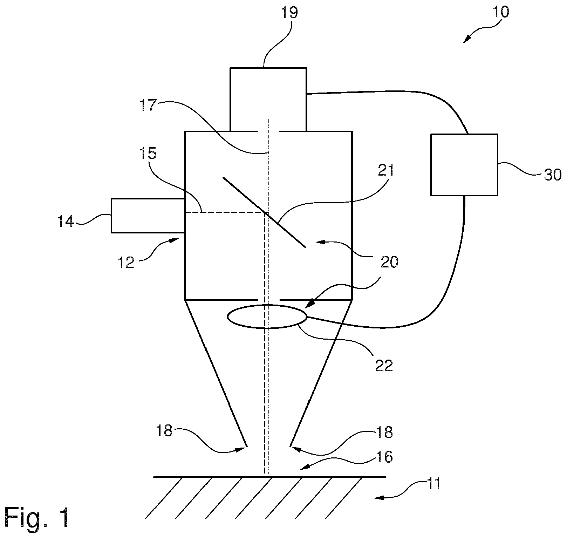

Fig. 1a zeigt als ein erstes Ausführungsbeispiel der Erfindung einen Strahlbearbeitungskopf in Form eines Laserschneidkopfes 10 zum Bearbeiten eines Werkstücks 11 durch Laserschneiden. Der Laserschneidkopf 10 weist auf: eine Schnittstelle 12, an der in diesem Beispiel eine Bearbeitungslaserquelle 14 zum Emittieren eines Bearbeitungslaserstrahls 15 als fokussierter Bearbeitungsenergiestrahl vorgesehen ist; eine Austrittsöffnung 16 für den Bearbeitungslaserstrahl 15, die einen Öffnungsrand 18 besitzt; eine optische Detektoreinheit 19 zum Detektieren eines vom Werkstück 11 emittierten Prozesslichtstrahls 17, auch Prozesslicht 17 genannt, als emittierte elektromagnetische Strahlung; einen dichroitischen Umlenkspiegel 21, der den Bearbeitungslaserstrahl 15 reflektiert und in Richtung der Austrittsöffnung 16 umlenkt und der für den Prozesslichtstrahl 17 zumindest teilweise transparent ist; sowie eine Linse 22, vorliegend eine Fokussierlinse, zwischen dem Umlenkspiegel 21 und der Austrittsöffnung 22.

Die Bearbeitungslaserquelle 14 besitzt im vorliegenden Beispiel eine Leistung von ungefähr 12 kW und erzeugt den Bearbeitungslaserstrahl 15 mit einer zentralen Wellenlänge von ca. 1070 nm. Es können aber auch andere für die Laserbearbeitung, insbesondere Laserschneiden, geeignete Leistungen und/oder Spektralbereiche gewählt werden, z.B. in einem Bereich von 300 W bis 25 kW und 200 bis 1100 nm.

Der Öffnungsrand 18 der Austrittsöffnung 16 ist im vorliegenden Beispiel kreisförmig und hat einen Durchmesser von 4 mm.

Die optische Detektoreinheit 19 dient zum Aufnehmen mindestens eines Bildes des vom Werkstück 11 durch die Austrittsöffnung 16 in den Laserschneidkopf 10 emittierten Prozesslichtstrahls 17. Im vorliegenden Beispiel wird eine mit einem Filter versehene monochromatische CMOS-Videokamera eingesetzt, die für einen Wellenlängenbereich des Prozesslichtstrahls 17, z.B. von 400 bis 1000 nm empfindlich ist. Die optische Detektoreinheit 19 und die Bearbeitungslaserquelle 14 können an dem Laserschneidkopf 10 auch vertauscht angeordnet sein. In diesem Fall ist der Umlenkspiegel 21 für den Bearbeitungslaserstrahl 15 zumindest teilweise transparent und für das Prozesslicht reflektierend ausgebildet. In weiteren Beispielen können andere strahlungsempfindliche Detektoren, wie Photodioden, CCD-Kamera vorgesehen sein. Die optische Detektoreinheit 19 kann einzelne Bilder und/oder eine Abfolge von Bildern, Letztere insbesondere als Videostream, erzeugen. Im Folgenden wird die Detektoreinheit 19 auch als Kamera oder Videokamera, und die damit erzeugten einzelnen oder aufeinanderfolgenden Bilder auch als Aufnahmen oder Videoaufnahmen oder Videostream bezeichnet.

Im vorliegenden Beispiel ist die Fokussierlinse 22 mittels einer ansteuerbaren, mit einem Antrieb versehenen Halterung (nicht gezeigt) relativ zu ihrer zentralen Achse verschwenkbar ausgebildet, um die Propagationsrichtung des Bearbeitungslaserstrahls 15 durch die Austrittsöffnung 16 in Richtung des Werkstücks 11 einzustellen. Statt der Fokussierlinse 22 kann eine entsprechend verschwenkbare Kollimationslinse vorgesehen sein. Optional können weitere optische Elemente zum Führen und Formen des Bearbeitungslaserstrahls 15 vorhanden sein. In anderen Beispielen ist der Umlenkspiegel 21 mittels einer ansteuerbaren, mit einem Antrieb versehenen Halterung verschwenkbar ausgebildet, um die Propagationsrichtung des Bearbeitungslaserstrahls 15 durch die Austrittsöffnung 16 in Richtung des Werkstücks 11 einzustellen. Auf diese Weise kann eine Positionierungseinheit 20 realisiert werden zum kontinuierlichen oder diskontinuierlichen Einstellen der Positionsbeziehung zwischen der mindestens einen Position des Zentrums des Prozesslichts 17 und der mindestens einen Position der Austrittsöffnung 16 im aufgenommenen Bild, insbesondere auf eine vorbestimmte Positionsbeziehung. Alternativ oder zusätzlich zum Einstellen der Position des Bearbeitungslaserstrahles mittels Verstellen der Strahlführungskomponenten, d.h. des Umlenkspiegels 21 oder der Fokussierlinse 22, kann die Position der Austrittsöffnung 16 verändert werden, wobei eine ansteuerbare, mit einem Antrieb versehene Austrittsöffnungsverschiebeautomatik vorhanden sein kann. (nicht gezeigt in den Figuren).

Ferner ist eine Überwachungseinheit 30 vorgesehen, die mit der Detektoreinheit 19 (drahtgebunden oder drahtlos) datenleitend verbunden ist. Die Überwachungseinheit 30 kann, wie in Fig. 1 gezeigt ist, zudem mit der Halterung der Fokussierlinse 22 datenleitend (drahtgebunden oder drahtlos) verbunden sein, um die Propagationsrichtung des Bearbeitungslaserstrahls 15 durch die Austrittsöffnung 16 und/oder einen erwünschten Versatz derselben zueinander in Richtung des Werkstücks 11 einstellen zu können. In Beispielen mit verschwenkbarem Umlenkspiegel 21 kann die Überwachungseinheit 30 alternativ oder zusätzlich mit dem Antrieb der Halterung des Umlenkspiegels 21 datenleitend verbunden sein. In Beispielen mit verschiebbarer Austrittsöffnung 16 kann die Überwachungseinheit 30 alternativ oder zusätzlich mit dem Antrieb der Austrittsöffnungsverschiebeautomatik datenleitend verbunden sein.

Die Überwachungseinheit 30 weist ein erstes Ermittlungsmodul zum Ermitteln mindestens einer Position der Austrittsöffnung 16 in dem mindestens einen Bild, ein zweites Ermittlungsmodul zum Ermitteln mindestens einer Position des Zentrums des Prozesslichtstrahls 17 in dem mindestens einen Bild, und ein drittes Ermittlungsmodul zum Ermitteln der Positionsbeziehung zwischen der mindestens einen Position des Zentrums Prozesslichtstrahls 17 und der mindestens einen Position der Austrittsöffnung 16 auf. Die Überwachungseinheit 30 ist im vorliegenden Beispiel Teil einer computergestützten zentralen Steuereinheit des Laserschneidkopfes 10. Das erste, zweite und dritte Ermittlungsmodul sind vorliegend Computerprogrammmodule, die nach Laden in einen Speicher der Überwachungseinheit 30 von dem Laserschneidkopf 10 ausgeführt werden können. Das dritte Ermittlungsmodul ist im vorliegenden Beispiel ein Komparatormodul, das die im aufgenommenen Bild ermittelten Positionen des Zentrums der Austrittsöffnung 16 und des Zentrums des Prozesslichtstrahls 17 vergleicht.

Im Betrieb des Laserschneidkopfes 10 wird der Bearbeitungslaserstrahl 15 erzeugt und mit dem dichroitischen Spiegel 21 und der Fokussierlinse 22 auf dem Werkstück 11 abgebildet. Das Werkstück 11 wird in einer Prozesszone mit dem Bearbeitungslaserstrahl 15 bearbeitet, wobei der Bearbeitungslaserstrahl 15 über das Werkstück geführt wird. Dabei wird im Werkstück 11 ein Schnitt mit einem Schnittspalt erzeugt. Die beim Laserschneiden durch die Eigenemission des Werkstücks 11 entstehende Strahlung gelangt als das Prozesslicht 17 zumindest teilweise durch die Austrittsöffnung 16 in den Laserschneidkopf 10. Dort durchdringt sie die Fokussierlinse 22 und den dichroitischen Spiegel 21, die beide für den Prozesslichtstrahl 17 zumindest teilweise transparent sind. Dieser gelangt schließlich in die Detektoreinheit 19 und wird dort von der Videokamera aufgenommen. Die so gewonnenen Videoaufnahmen werden in die Überwachungseinheit 30 geleitet, gespeichert und mit den Ermittlungsmodulen ausgewertet. Die Videoaufnahmen können im Moment der Laserbearbeitung, d.h. live, auf einem Monitor (nicht gezeigt) wiedergegeben werden, als Einzelaufnahmen und/oder als Videostream.

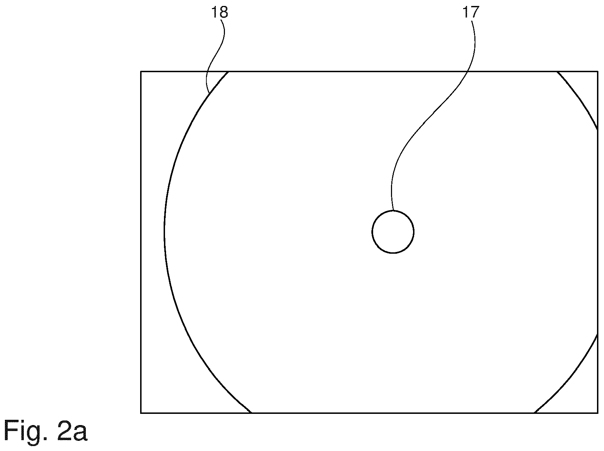

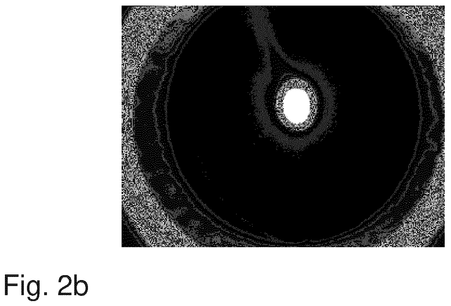

Fig. 2a stellt schematisch eine Aufnahme, d.h. ein aufgenommenes Bild, der Prozesszone des Werkstücks 11 durch die Austrittsöffnung 16 dar, in der der Öffnungsrand 18 der Austrittsöffnung 16 und der durch die Austrittsöffnung in den Laserschneidkopf 10 emittierte Prozesslichtstrahl 17 abgebildet ist. Fig. 2b zeigt die der Fig. 2a zugrundeliegende Kameraaufnahme. Da im vorliegenden Beispiel der Öffnungsrand 18 aus Messing oder Kupfer ausgebildet ist und eine reflektierende Oberfläche hat, wird nicht nur das im Werkstück 11 vom Bearbeitungslaserstrahl 15 induzierte und vom Werkstück emittierte Prozesslicht 17, sondern auch das am Öffnungsrand 18 in den Laserschneidkopf reflektierte Prozesslicht 17 mit der Videokamera aufgenommen.

Aus der Aufnahme der Fig. 2b ermittelt das erste Ermittlungsmodul die Position mindestens dreier Pixel des abgebildeten inneren Öffnungsrands 18 und daraus die Position der räumlichen Mitte der Austrittsöffnung 16 in der Aufnahme. Das zweite Ermittlungsmodul ermittelt vorliegend die Position des räumlich zentralen Pixels des abgebildeten Prozesslichts 17, z.B. dessen Position in zwei zueinander senkrechten Richtungen, und daraus die räumliche Position der Mitte des Prozesslichts in der Aufnahme. Beide Positionen werden vom dritten Ermittlungsmodul verglichen, das daraus eine Positionsbeziehung ermittelt.

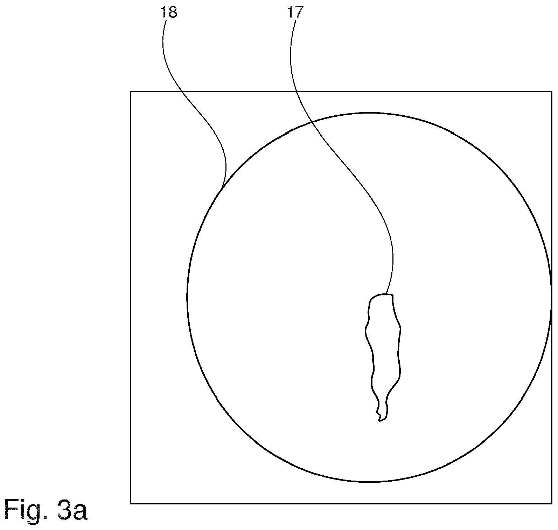

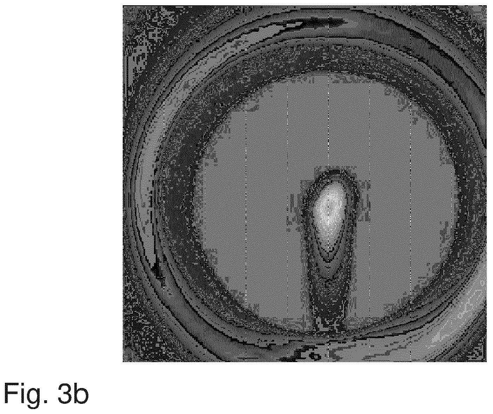

Ist das Prozesslicht 17 in der Kameraaufnahme, wie in Fig. 3a, 3b gezeigt, in Schneidrichtung die Länge gezogen abgebildet, z.B. aufgrund der Geschwindigkeit des Schneidprozesses und/oder wegen eines Nachleuchtens im Werkstück, wird zur Ermittlung der zentralen räumlichen Position des Prozesslichts 17 in Längsrichtung des abgebildeten Prozesslichts 17 eine Schätzung vorgenommen. Beispielsweise wird in diesem Fall in Längsrichtung eine höhere Fehlertoleranz, etwa von 10%, berücksichtigt als in Querrichtung, etwa 1-5%. Diese Schätzung wird im vorliegenden Beispiel vom zweiten oder dritten Ermittlungsmodul vorgenommen.

Im vorliegenden Beispiel wird die ermittelte Positionsbeziehung auf dem Monitor angezeigt. Alternativ oder zusätzlich kann bei Vorliegen einer unerwünschten Abweichung zwischen den beiden Positionen ein Warnsignal, z.B. akustisch, ausgegeben und so angezeigt werden.

In alternativen Beispielen werden vorstehende Maßnahmen zur Anzeige der ermittelten Positionsbeziehung von einem Kontrollmodul, das in der Überwachungseinheit 30 des Laserschneidkopfs 10 ebenfalls als ein Computerprogrammmodul implementiert ist, veranlasst. Das Kontrollmodul kann ferner ausgeben: einen Steuerbefehl, insbesondere an die zentrale Steuereinheit, ausgewählt aus einem Befehl zum Fortsetzen der Bearbeitung und einem Befehl zum Beenden der Bearbeitung.

Andere Beispiele basieren auf einer (vor oder zu Beginn der Bearbeitung) einmaligen oder (im Verlauf der Bearbeitung) wiederholten Kalibration des Abbildungsmaßstabs eines oder mehrerer aufgenommener Bilder unter Abspeicherung der zugehörigen Aufnahmebedingungen, beispielsweise in der Aufnahme der Fig. 2a, 2b. Aus dem bekannten Durchmesser des Öffnungsrandes 18 der Austrittsöffnung 16 und der Anzahl der Pixel des Durchmessers der in der Kameraaufnahme abgebildeten Austrittsöffnung 16 wird der Abbildungsmaßstab der Aufnahme ermittelt. Damit kann aus der Anzahl der Pixel von Abmessungen aufgenommener Objekte oder von Abständen aufgenommener Objekte auf die tatsächlichen räumlichen Abmessungen bzw. Abstände der betreffenden Objekte, d.h. vorliegend des Prozesslichtstrahls 17 und der Austrittsöffnung 16, im Schneidkopf 10 geschlossen werden.

Basierend auf einer derartigen Kalibration kann das Kontrollmodul mindestens einen Positionierungsbefehl ausgeben, insbesondere an die Positionierungseinheit 20, vorliegend an die ansteuerbaren Halterungen des Umlenkspiegels 21 und/oder der Fokussierlinse 22. Dadurch wird die Positionsbeziehung zwischen der mindestens einen Position des Zentrums des Prozesslichtstrahls 17 und der mindestens einen Position der Austrittsöffnung 16 auf eine vorbestimmte Positionsbeziehung eingestellt, z.B. im laufenden Videostream. Dies kann diskontinuierlich vor einem Bearbeitungsvorgang, zu Beginn eines Bearbeitungsvorgangs oder mit Unterbrechung des Bearbeitungsvorgangs und/oder diskontinuierlich oder kontinuierlich während eines Bearbeitungsvorgangs des Strahlschneidens geschehen. Eine Einstellung auf die vorbestimmte Positionsbeziehung außerhalb des Bearbeitungsvorgangs, also offline, hat die Vorteile, dass der Laserschneidkopf 10 und die Detektoreinheit 19 nicht in Bewegung sind, womit vermieden werden kann, dass das Prozesslicht 17 in die Länge gezogen darstellt wird, und dass mit einer geringen Kamerabildfrequenz aufgenommen werden kann.

Die vorbestimmte Positionsbeziehung kann als konstant oder als variabel, z.B. in Abhängigkeit von einer Bearbeitungsvorgabe, vorgegeben sein. In der vorbestimmten Positionsbeziehung kann ein erwünschter, konstanter oder variabler, paralleler oder nicht paralleler Versatz des Bearbeitungslaserstrahls 15 und der Austrittsöffnung 16 zueinander berücksichtigt sein.

Alternativ oder zusätzlich kann ein Positionierungsbefehl an einen Manipulator, der den Schneidkopf 10 innerhalb einer Bearbeitungsmaschine bewegt, ausgegeben werden und der Manipulator klemmt vor dem Bearbeitungsvorgang oder nach Unterbrechung des Bearbeitungsvorgangs das Gehäuse des Schneidkopfs 10 in der Nähe der Austrittsöffnung 16 an der Bearbeitungsmaschine fest und verfährt den Schneidkopf 10 solange in geeignete Richtungen, bis, z.B. im laufenden Videostream, die gewünschte Positionsbeziehung zwischen der abgebildeten Austrittsöffnung 16 und dem abgebildeten Zentrum des Prozesslichts 17 erreicht ist. Ist alternativ bei einem kalibrierten System bekannt, um wie viel die tatsächliche Austrittsöffnung 16 verschoben werden muss, kann der Schneidkopf 10 um dieses Maß verfahren werden, ohne dass ein laufender Videostream überwacht werden muss.

Wenn bekannt ist, dass durch eine Kollision, Teileberührung etc. des Laserschneidkopfs 10 typischerweise nur die Austrittsöffnung 16 oder nur das Zentrum des Prozesslichts 17 aus der idealen Position verschoben wird, kann die Einstellung auf die vorbestimmte Positionsbeziehung vereinfacht werden, indem nur die betreffende verschobene Position korrigiert wird. Ist z.B. bekannt, dass nur die Position der Austrittsöffnung 16 verschoben werden kann und die Position des Prozesslichts 17 stets unverändert bleibt, so kann auch nur die Position der Austrittsöffnung neu ermittelt werden. Die neu ermittelte Position der Austrittsöffnung 16 kann dann entweder mit deren bekannter Position verglichen und ggf. neu eingestellt werden. Alternativ kann die neu ermittelte Position der Austrittsöffnung 16 auch mit der bekannten oder offline bestimmten Position des Prozesslichts 17 verglichen und ggf. korrigiert werden.

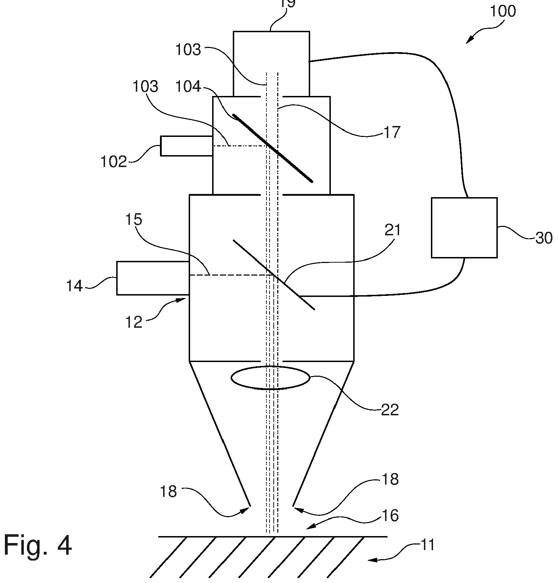

Fig. 4 zeigt schematisch einen Laserschneidkopf 100 eines zweiten Ausführungsbeispiels, der im Vergleich zum Laserschneidkopf 10 zusätzlich eine Beleuchtungseinheit aufweist. In diesem Beispiel ist der Umlenkspiegel 21 verschwenkbar und die Überwachungseinheit 30 ist mit dem Antrieb der Halterung des Umlenkspiegels 21 datenleitend verbunden, um die Propagationsrichtung des Bearbeitungslaserstrahls 15 durch die Austrittsöffnung 16 und/oder einen erwünschten Versatz derselben zueinander in Richtung des Werkstücks 11 einstellen zu können.

Die Beleuchtungseinheit weist eine Beleuchtungslichtquelle 102 zum Emittieren eines Beleuchtungslichtstrahls 103 auf. Als Beleuchtungslichtquelle 102 wird eine schmalbandige und räumlich gerichtete Lichtquelle verwendet, im vorliegenden Beispiel ein Diodenlaser. Die Beleuchtungslichtquelle 102 wird im vorliegenden Beispiel mit einer Leistung von ungefähr 1000 mW betrieben und erzeugt den Beleuchtungslichtstrahl 103 mit einer zentralen Wellenlänge von ca. 638 nm, mit einem Wellenlängenband von 6 nm. Alternativ können Beleuchtungslichtquellen eingesetzt werden, die einen Beleuchtungslichtstrahl in einem Wellenlängenbereich von 400 bis 1000 nm erzeugen. Die Leistung der Beleuchtungslichtquelle kann einstellbar sein. Je nach Leistung der Bearbeitungslaserquelle 14 und/oder der Beschaffenheit des Werkstücks 11 können unterschiedliche Beleuchtungsleistungen vorteilhaft sein. Beispielsweise kann die Beleuchtungslichtquelle zwischen ca. 100 und 2000 mW einstellbar sein.

Zusätzlich ist im vorliegenden Beispiel, in dem die Beleuchtungslichtquelle 102 seitlich am Laserschneidkopf angeordnet ist, ein dichroitischer Umlenkspiegel 104 vorgesehen zum mindestens teilweisen Umlenken des Beleuchtungslichtstrahls 103 in Richtung der Austrittsöffnung 16 koaxial zum Bearbeitungslaserstrahl 15. Damit der vom Werkstück 11 in den Bearbeitungskopf 100 reflektierte Beleuchtungslichtstrahl 103 ebenfalls detektiert wird, ist die Detektoreinheit (auch) für diesen zumindest teilweise empfindlich und der Umlenkspiegel 104, der Umlenkspiegel 21 und die Fokussierlinse 21 sind (auch) für diesen zumindest teilweise transparent.

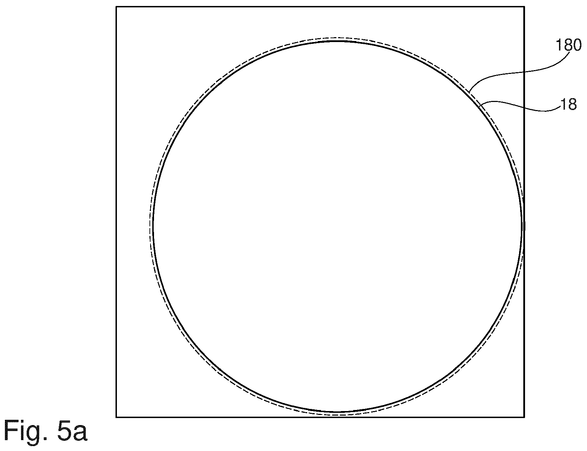

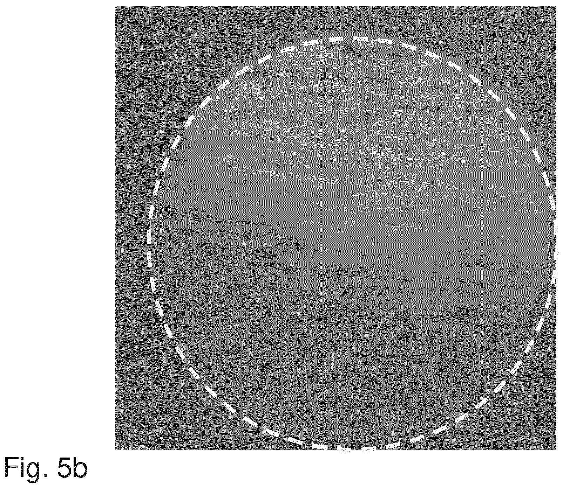

Fig. 5a zeigt schematisch eine Aufnahme des Werkstücks 11 durch die Austrittsöffnung 16 des Laserschneidkopfs 100, bei der das Werkstück 11 lediglich beleuchtet und nicht bearbeitet wird. D.h. bei dieser Aufnahme wird die Bearbeitungslaserquelle 14 abgeschaltet und die Beleuchtungslichtquelle 102 eingeschaltet. Fig. 5b zeigt die entsprechende Kameraaufnahme. Die Beleuchtungslichtquelle 102 beleuchtet hierbei sowohl den Öffnungsrand 18, als auch das Werkstück 11. Daher zeigt diese Aufnahme den Öffnungsrand 18 der Austrittsöffnung 16. In der Aufnahme sind die zugehörigen, von dem ersten Ermittlungsmodul ermittelten Pixel, d.h. die Positionen des Öffnungsrandes 18 in der Aufnahme, mit einer gestrichelten Linie 180 gekennzeichnet. Das erste Ermittlungsmodul ermittelt daraus die Position der räumlichen Mitte der Austrittsöffnung 16 in der Aufnahme, wie oben zum ersten Ausführungsbeispiel erläutert. Mit dieser Aufnahme kann ferner eine Kalibration des Abbildungsverhältnisses wie oben beschrieben ausgeführt werden, wenn bekannt ist, wie groß die Düsenöffnung tatsächlich ist.

Im Schneidbetrieb wird die Prozesszone des Werkstücks 11 mit dem Laserschneidkopf 100 nicht nur mit dem Bearbeitungslaserstrahl 15 bearbeitet, sondern auch durch die Austrittsöffnung 16 mit dem Beleuchtungslichtstrahl 103 beleuchtet. Letzteres kann kontinuierlich, diskontinuierlich, intermittierend und/oder stroboskopisch erfolgen.

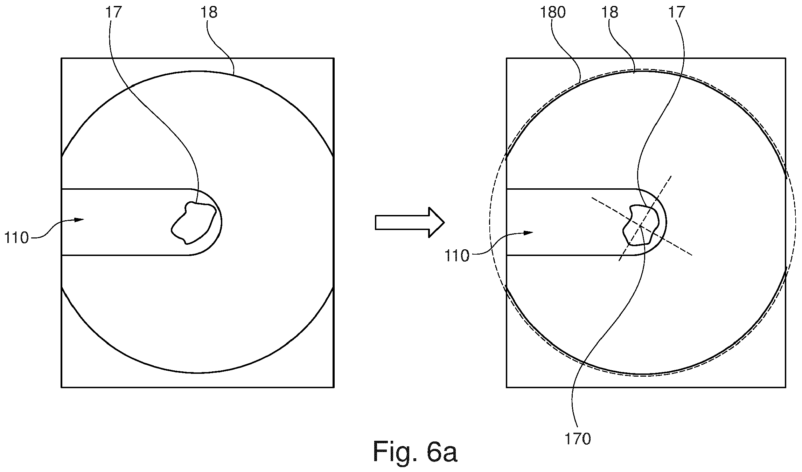

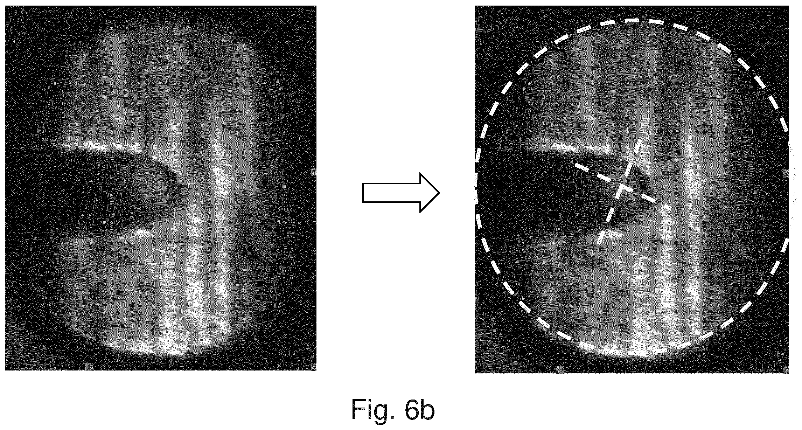

Fig. 6a zeigt links schematisch eine Aufnahme einer bearbeiteten und beleuchteten Prozesszone eines Werkstücks durch die Austrittsöffnung des Laserschneidkopfs 100. Hierfür wurde die Beleuchtung und/oder die Kamerabelichtung der Detektoreinheit 19 so gewählt dass sowohl das Prozesslicht 17 als auch der Rand der Austrittsöffnung 16 sichtbar sind. In der Aufnahme sind das Prozesslicht 17, der Öffnungsrand 18 sowie der Schnittspalt 110 abgebildet. Fig. 6a zeigt rechts schematisch dieselbe Aufnahme mit ermittelter Position 180 des inneren Öffnungsrandes 18 der Austrittsöffnung 16 und mit ermittelter Position 170 des durch die Austrittsöffnung in den Laserschneidkopf emittierten Prozesslichts 17. Die durch das erste und das zweite Ermittlungsmodul ermittelten Positionen in der Aufnahme bzw. deren Pixel sind mit gestrichelten Linien gekennzeichnet. Fig. 6b zeigt die entsprechende Kameraaufnahme. Das erste Ermittlungsmodul ermittelt daraus die Position der räumlichen Mitte der Austrittsöffnung 16 in der Aufnahme und das zweite Ermittlungsmodul ermittelt daraus die Position 170 der räumlichen Mitte des Prozesslichtstrahls 17, wie oben zum ersten Ausführungsbeispiel erläutert. Alternativ kann vom zweiten Ermittlungsmodul die Position des Zentrums der höchsten Energiedichte des Prozesslichtstrahls 17 bestimmt werden. Z.B. kann das hellste Pixel oder eine Gruppe zusammenhängender Pixel mit der größten, insbesondere gemittelten, Helligkeit des aufgenommenen digitalen Bildes genutzt werden. Die ermittelten Positionen der Austrittöffnung 16 und des Prozesslichtstrahls 17 werden vom dritten Ermittlungsmodul verglichen, das daraus eine Positionsbeziehung ermittelt.

In alternativen Beispielen wird die Prozesszone des Werkstücks 11 mit zwei oder mehr Bildern alternierend mit Beleuchtung und ohne Beleuchtung aufgenommen. In einem Beispiel wird die Beleuchtungslichtquelle 102 periodisch alternierend, insbesondere stroboskopisch, betrieben, d.h. die Beleuchtung erfolgt in bestimmten, regelmäßig aufeinanderfolgenden Zeitintervallen. Hierfür wird während der Bearbeitung des Werkstücks 11 dessen Prozesszone in ersten Zeitintervallen beleuchtet, die voneinander durch zweite Zeitintervalle getrennt sind, in denen die Prozesszone nicht beleuchtet wird. Die Detektoreinheit 19 ist ausgebildet zum Detektieren des Prozesslichts 17 und des reflektierten Beleuchtungslichts 103 und zum Bereitstellen von abwechselnden Bildern der beleuchteten und der unbeleuchteten Prozesszone. Letzteres kann beispielsweise in Form eines Videostreams erfolgen. Der Videostream wird als eine Mehrzahl von Videoframes, die Bilder/Aufnahmen der Prozesszone wiedergeben, mit einer Bildfrequenz, auch Framerate bezeichnet, bereitgestellt. Die ersten und zweiten Zeitintervalle sind mit der Bildfrequenz synchronisiert.

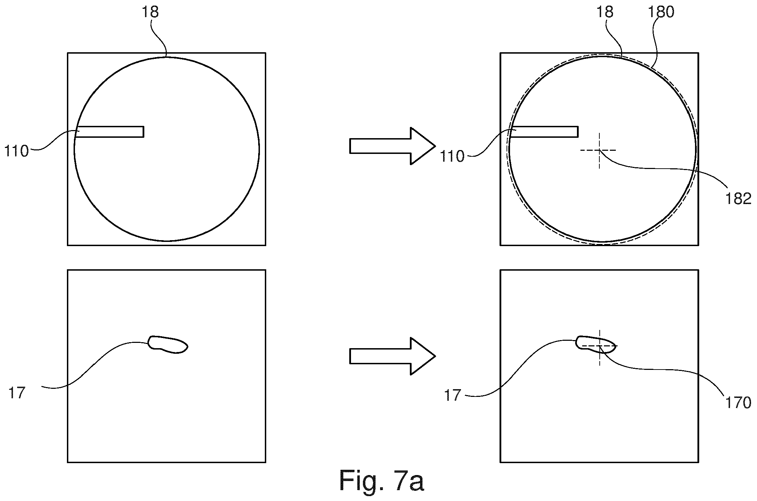

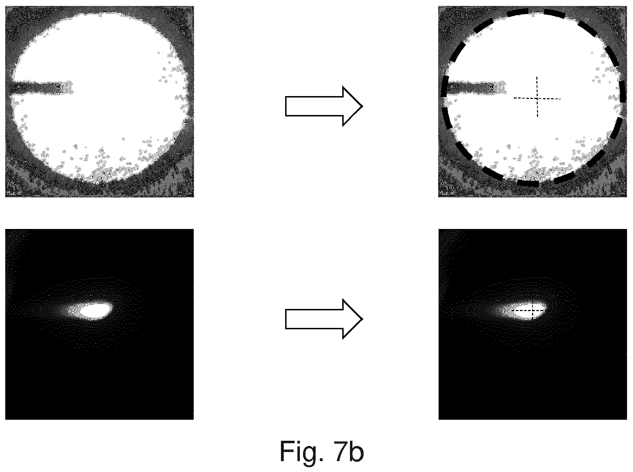

In Fig. 7a sind schematisch zwei Aufnahmen der Prozesszone des Werkstücks 11 wiedergegeben, die alternierend mit Beleuchtung (obere Zeile der Fig. 7a) und ohne Beleuchtung (untere Zeile der Fig. 7a) aufgenommen wurden. Fig. 7a zeigt links schematisch die zwei Aufnahmen der Prozesszone durch die Austrittsöffnung 16 des Laserschneidkopfs 100. Darin sind der Öffnungsrand 18, der Schnittspalt 110 und das Prozesslicht 17 abgebildet. Fig. 7a zeigt rechts schematisch dieselben Aufnahmen mit ermittelter Position 180 des Öffnungsrandes 18, ermittelter Position 182 der räumlichen Mitte der Austrittsöffnung 16 und ermittelter Position 170 des Prozesslichts 17. Fig. 7b zeigt die der Fig. 7a entsprechenden Kameraaufnahmen. Das erste Ermittlungsmodul ermittelt die Position 182 der räumlichen Mitte der Austrittsöffnung 16 in der Aufnahme und das zweite Ermittlungsmodul ermittelt die Position 170 der räumlichen Mitte des Prozesslichtstrahls 17, wie oben zur Fig. 6a, 6b erläutert. Die ermittelte Position 182 der Mitte der Austrittöffnung 16 und die ermittelte Position 170 des Prozesslichtstrahls 17 werden vom dritten Ermittlungsmodul verglichen, das daraus eine Positionsbeziehung bestimmt.

In den vorstehenden Ausführungsbeispielen des Laserschneidkopfs ist die optische Detektoreinheit 19 koaxial mit der Austrittsöffnung 16 und koaxial in Bezug auf die Ausbreitungsrichtung des Bearbeitungslaserstrahls 15 durch die Austrittsöffnung 16 angeordnet. Dadurch nimmt die Detektoreinheit 19 mindestens ein Bild zumindest eines Teils des vom Werkstück 11 koaxial durch die Austrittsöffnung 16 in den Strahlbearbeitungskopf emittierten Prozesslichts 17 auf, insbesondere koaxial in Bezug auf die Ausbreitungsrichtung des Bearbeitungsenergiestrahls 15 durch die Austrittsöffnung. Auf diese Weise werden die Prozesszone des Werkstücks 11 und der Öffnungsrand 18 der Austrittsöffnung 16 mit der gleichen Perspektive aufgenommen. In alternativen Beispielen ist die optische Detektoreinheit 19 nicht koaxial mit der Austrittsöffnung vorgesehen, sondern z.B. seitlich am Laserschneidkopf. Bei derartigen Beispielen können im Schneidkopf Umlenkeinrichtungen, z.B. Umlenkspiegel, zum Leiten des Prozesslichts 17 und des reflektierten Beleuchtungslichts 103 zur Detektoreinheit 19 vorgesehen sein. Dadurch können die Prozesszone des Werkstücks 11 und der Öffnungsrand 18 der Austrittsöffnung 16 mit der gleichen Perspektive aufgenommen werden. In anderen Beispielen ist bei einer nicht-koaxialen Anordnung der optischen Detektoreinheit 19 und der Austrittsöffnung 16 keine Umlenkeinrichtung zur Detektoreinrichtung vorgesehen. Dann werden die Prozesszone des Werkstücks 11 und der Öffnungsrand 18 der Austrittsöffnung 16 mit unterschiedlichen Perspektiven aufgenommen. In diesen Fällen sind das dritte Ermittlungsmodul und/oder das Kontrollmodul zum Korrigieren mindestens einer Perspektive des mindestens eines Bildes und/oder unterschiedlicher Perspektiven der mindestens einen Position der Austrittsöffnung 16 und der mindestens einen Position des Zentrums des Prozesslichts 17 ausgebildet und führen im Betrieb derartige Korrekturen durch.

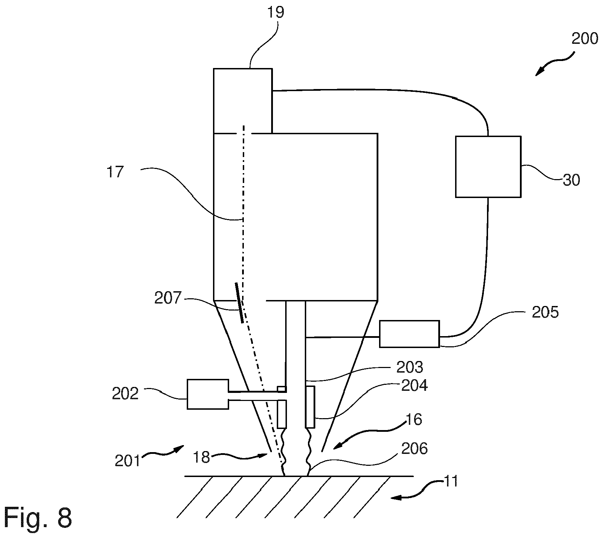

Fig. 8 zeigt schematisch einen Plasmaschneidkopf 200 eines dritten Ausführungsbeispiels. Der Plasmaschneidkopf 200 enthält eine Plasmaerzeugungseinrichtung 201 mit einem Gasreservoir 202 und einer düsenförmigen Ringelektrode 204, die im Schneidkopf an der Austrittsöffnung 16 angeordnet ist. Die Ringelektrode 204 ist an einer Elektrodenhalterung 203 vorgesehen, die mittels einer mit einem Antrieb versehenen Elektrodenverstelleinheit 205 verstellbar ist. Die Elektrodenverstelleinheit 205 ist wiederum mit der Überwachungseinheit 30 datenleitend verbunden, welche ihrerseits mit der Detektoreinheit 19 datenleitend verbunden ist. Die Position der Ringelektrode 204 ist mittels der Elektrodenhalterung 203 und der Elektrodenverstelleinheit 205 relativ zur Austrittsöffnung einstellbar. Das Gasreservoir 202 enthält ein Gas wie z.B. Argon, Stickstoff, Sauerstoff und/oder Wasserstoff und ist mit dem Innenraum der Ringelektrode 204 gasleitend verbunden. Die Plasmaerzeugungseinrichtung 201 weist zudem eine Stromversorgung und eine elektrische Anschlussverbindung (jeweils nicht gezeigt) auf, um zwischen der Ringelektrode 204, und dem metallischen Werkstück 11, welches als Gegenelektrode dient, eine Spannung bzw. ein elektrisches Feld anzulegen. Die optische Achse der Detektoreinheit 19 und der dort enthaltenen Videokamera verläuft in diesem Beispiel nicht koaxial zum Plasmastrahl 206, sondern schräg. Hierfür wird ein Teil des Prozesslichts 17, das schräg zum Plasmastrahl 206 seitlich von der Prozesszone emittiert wird, durch Umlenken an einem Umlenkspiegel 207 zur Detektoreinheit 19 geführt.

In einem alternativen Beispiel kann im Schneidkopf an der Austrittsöffnung 16 statt der Ringelektrode 204 eine von einer Gasdüse umgebene stabförmige Innenelektrode vorgesehen sein, deren Position verstellbar ist.

Im Betrieb des Plasmaschneidkopfes 200 wird mittels der Plasmaerzeugungseinrichtung 201 ein Plasmastrahl 206 aus positiven und negativen Ionen und Elektronen erzeugt und auf das Werkstück 11 geleitet, indem das in die Ringelektrode 204 geleitete Gas gezündet wird. Dabei wird in dem Gas das Plasma durch die Plasmaerzeugungseinrichtung 201 mit einem Hochspannungspuls induziert. Innerhalb des Plasmastrahls 206 entsteht ein Lichtbogen. Der Plasmastrahl 206 wird über die Oberfläche des Werkstücks 11 geführt, um dieses zu schneiden. Dabei resultiert das Prozesslicht 17 als die vom Werkstück 11 emittierte elektromagnetische Strahlung aus der Wechselwirkung des Plasmastrahls 206 mit dem Werkstück 11. Die Positionsbeziehung des Prozesslichts 17 und der Austrittsöffnung 16 zueinander wird analog wie oben zum Laserschneidkopf erläutert ermittelt und überwacht und falls nötig eingestellt. Für die Ermittlung der Positionsbeziehung kann, wegen der schräg zum Plasmastrahl 206 verlaufenden optischen Achse der Detektoreinheit 19, mit der Überwachungseinheit 30 die Perspektive des mindestens einen Bildes korrigiert werden, das von der Detektoreinheit 19 aufgenommenen wird. Beispielsweise können unterschiedliche Perspektiven der mindestens einen Position 180, 182 der Austrittsöffnung 16 und der mindestens einen Position 170 des Zentrums der emittierten elektromagnetischen Strahlung 17 in dem/den Bild/Bildern mittels dem dritten Ermittlungsmodul und/oder dem Kontrollmodul korrigiert werden,

### Bezugszeichenliste

- 10: Laserschneidkopf
- 11: Werkstück
- 12: Schnittstelle
- 14: Bearbeitungslaserquelle
- 15: Bearbeitungslaserstrahl
- 16: Austrittsöffnung
- 17: emittierte elektromagnetische Strahlung, Prozesslicht, Prozesslichtstrahl
- 18: Öffnungsrand
- 19: Detektoreinheit; Kamera, Videokamera
- 20: Positionierungseinheit
- 21: Umlenkspiegel
- 22: Linse, Fokussierlinse
- 30: Überwachungseinheit
- 100: Laserschneidkopf
- 102: Beleuchtungseinheit, Beleuchtungslichtquelle
- 103: Beleuchtungslichtstrahl
- 104: Umlenkspiegel
- 110: Schnittspalt
- 170: Position des Zentrums der emittierten elektromagnetischen Strahlung
- 180: Position der Austrittsöffnung, Position des Öffnungsrandes
- 182: Position der Austrittöffnung, Position der Mitte der Austrittöffnung
- 200: Plasmaschneidkopf
- 201: Plasmaerzeugungseinrichtung
- 202: Gasreservoir
- 203: Elektrodenhalterung
- 204: Ringelektrode
- 205: Elektrodenverstelleinheit
- 206: Plasmastrahl
- 207: Umlenkspiegel

## Patentansprüche

1. Strahlbearbeitungskopf zum Strahlschneiden eines Werkstücks,
mit einer Schnittstelle (12) für eine Energiestrahlquelle (14; 14, 201) zum Erzeugen eines fokussierten Bearbeitungsenergiestrahls (15; 206), ausgewählt aus einer Teilchenstrahlquelle, einer Brennfluidstrahlquelle, einer Plasmastrahlquelle und/oder einer Quelle für elektromagnetische Strahlung;
mit einer von einem Öffnungsrand (18) begrenzten Austrittsöffnung (16) für den Bearbeitungsenergiestrahl ;
mit einer optischen Detektoreinheit (19) zum Aufnehmen mindestens eines Bildes einer vom Werkstück (11) durch die Austrittsöffnung (16) in den Strahlbearbeitungskopf (10; 100; 200) emittierten elektromagnetischen Strahlung (17), die in dem Werkstück vom Bearbeitungsenergiestrahl induziert wird; und
mit einer mit der optischen Detektoreinheit datenleitend verbundenen Überwachungseinheit (30) zum Überwachen einer Positionsbeziehung zwischen einem Zentrum der emittierten elektromagnetischen Strahlung (17) und der Austrittsöffnung (16),
wobei die Überwachungseinheit (30) aufweist:
ein erstes Ermittlungsmodul zum Ermitteln mindestens einer Position (180; 182) der Austrittsöffnung (16) in dem mindestens einen Bild;
ein zweites Ermittlungsmodul zum Ermitteln mindestens einer Position (170) des Zentrums der emittierten elektromagnetischen Strahlung (17) in dem mindestens einen Bild; und
ein drittes Ermittlungsmodul zum Ermitteln der Positionsbeziehung zwischen der mindestens einen Position (170) des Zentrums der emittierten elektromagnetischen Strahlung (17) und der mindestens einen Position (180; 182) der Austrittsöffnung (16).

2. Strahlbearbeitungskopf nach Anspruch 1,
wobei die Überwachungseinheit (30) ein Kontrollmodul aufweist zum Ausgeben mindestens eines Elements ausgewählt aus
einem die ermittelte Positionsbeziehung anzeigenden Signal, insbesondere an eine Anzeigeeinheit;
einem Signal, das eine von einer vorbestimmten Positionsbeziehung abweichende,
ermittelte Positionsbeziehung anzeigt;
einem Steuerbefehl, insbesondere an eine Steuereinheit, ausgewählt aus einem Befehl zum Fortsetzen der Bearbeitung und einem Befehl zum Beenden der Bearbeitung; und mindestens eines Positionierungsbefehls, insbesondere an eine Positionierungseinheit (20; 203, 205), zum Einstellen der Positionsbeziehung zwischen der mindestens einen Position (170) des Zentrums der emittierten elektromagnetischen Strahlung (17) und der mindestens einen Position (180, 182) der Austrittsöffnung (16) auf eine vorbestimmte Positionsbeziehung.

3. Strahlbearbeitungskopf nach einem der vorstehenden Ansprüche,
wobei das erste Ermittlungsmodul zum Ermitteln der mindestens einen Position (180, 182) der Austrittsöffnung (16) in mindestens zwei Richtungen ausgebildet ist; und/oder wobei das erste Ermittlungsmodul zum Ermitteln mindestens eines Elements ausgewählt aus der mindestens einen Position (180) des die Austrittsöffnung (16) begrenzenden Öffnungsrands (18) und der Position (182) eines Zentrums der Austrittsöffnung (16) ausgebildet ist.

4. Strahlbearbeitungskopf nach einem der vorstehenden Ansprüche,
wobei das zweite Ermittlungsmodul zum Ermitteln der mindestens einen Position (170) des Zentrums der emittierten elektromagnetischen Strahlung (17) in mindestens zwei Richtungen ausgebildet ist; und/oder
wobei das zweite Ermittlungsmodul zum Ermitteln mindestens eines Elements ausgewählt aus der Position eines räumlichen Zentrums der emittierten Strahlung (17) und der Position eines Zentrums der höchsten Energiedichte der emittierten Strahlung (17) als die Position (170) des Zentrums der emittierten elektromagnetischen Strahlung (17) ausgebildet ist.

5. Strahlbearbeitungskopf nach einem der vorstehenden Ansprüche, mit
einer an der Schnittstelle (12) vorgesehenen Energiestrahlquelle (14) zum Erzeugen eines fokussierten Bearbeitungsenergiestrahls; und/oder
einer, insbesondere mit der Überwachungseinheit (30) datenleitend verbundenen, Positionierungseinheit (20; 21; 22; 203, 205) zum kontinuierlichen oder diskontinuierlichen Einstellen der Positionsbeziehung zwischen der mindestens einen Position (170) des Zentrums der emittierten elektromagnetischen Strahlung (17) und der mindestens einen Position (180; 182) der Austrittsöffnung (16), insbesondere auf eine vorbestimmte Positionsbeziehung; und/oder
einer Beleuchtungseinheit (102) zum kontinuierlichen, diskontinuierlichen,
intermittierenden und/oder stroboskopischen Beleuchten des Werkstücks durch die Austrittsöffnung (16) oder einer Schnittstelle für eine derartige Beleuchtungseinheit.

6. Strahlbearbeitungskopf nach einem der vorstehenden Ansprüche,
wobei die Austrittsöffnung (16) und die optische Detektoreinheit (30) koaxial angeordnet sind, insbesondere koaxial in Bezug auf eine Ausbreitungsrichtung des Bearbeitungsenergiestrahls durch die Austrittsöffnung (16); und/oder,
wobei die optische Detektoreinheit (19) zum Aufnehmen mindestens eines Bildes zumindest eines Teils einer vom Werkstück koaxial durch die Austrittsöffnung (16) in den Strahlbearbeitungskopf (10; 100; 200) emittierten elektromagnetischen Strahlung (17) ausgebildet ist, insbesondere koaxial in Bezug auf die Ausbreitungsrichtung des Bearbeitungsenergiestrahls durch die Austrittsöffnung (16); und/oder wobei die Austrittsöffnung (16) kreisförmig und/oder mit einen Durchmesser von 0,025 bis 10 mm, bevorzugt 0,6 bis 8 mm, mehr bevorzugt 0,8 bis 6 mm, ausgebildet ist; und/oder
wobei das dritte Ermittlungsmodul und/oder das Kontrollmodul zum Korrigieren mindestens einer Perspektive des mindestens eines Bildes und/oder unterschiedlicher Perspektiven der mindestens einen Position (180; 182) der Austrittsöffnung (16) und der mindestens einen Position (170) des Zentrums der emittierten elektromagnetischen Strahlung (17) ausgebildet ist.

7. Strahlbearbeitungsvorrichtung zum Strahlschneiden eines Werkstücks, insbesondere zur Laserbearbeitung oder Plasmastrahlbearbeitung, mit einem Strahlbearbeitungskopf (10; 100; 200) nach einem der vorstehenden Ansprüche.

8. Verwendung eines Strahlbearbeitungskopfes (10; 100; 200) nach einem der Ansprüche 1 bis 6 oder einer Strahlbearbeitungsvorrichtung nach Anspruch 7 zum Strahlschneiden, insbesondere zur Laserbearbeitung oder Plasmastrahlbearbeitung, eines Werkstücks.

9. Verfahren zum Strahlschneiden eines Werkstücks, insbesondere zur Laserstrahlbearbeitung oder Plasmastrahlbearbeitung, mit einem Strahlbearbeitungskopf (10; 100; 200) nach einem der Ansprüche 1 bis 6 oder einer Strahlbearbeitungsvorrichtung nach Anspruch 7, mit den Schritten:
Erzeugen eines Bearbeitungsenergiestrahls (15; 206) mit einer an der Schnittstelle (12) des Strahlbearbeitungskopfes vorgesehenen Energiestrahlquelle (14; 14, 206) zum Erzeugen eines fokussierten Bearbeitungsenergiestrahls, ausgewählt aus einer Teilchenstrahlquelle, einer Brennfluidstrahlquelle, einer Plasmastrahlquelle und/oder einer Quelle für elektromagnetische Strahlung;
Bestrahlen eines Werkstücks (11) mit dem Bearbeitungsenergiestrahl durch die Austrittsöffnung (16);
Bearbeiten des Werkstücks mit dem Bearbeitungsenergiestrahl, wobei im Werkstück eine elektromagnetische Strahlung (17) induziert wird, die zumindest teilweise koaxial zu dem Bearbeitungsenergiestrahl durch die Austrittsöffnung (16) in den Strahlbearbeitungskopf emittiert wird;
Aufnehmen mindestens eines Bildes zumindest eines Teils der vom Werkstück durch die Austrittsöffnung (16) in den Strahlbearbeitungskopf emittierten elektromagnetischen Strahlung (17), die in dem Werkstück vom Bearbeitungsenergiestrahl induziert wird, mit der optischen Detektoreinheit (19) des Strahlbearbeitungskopfes; und
Überwachen einer Positionsbeziehung zwischen einem Zentrum der emittierten elektromagnetischen Strahlung (17) und der Austrittsöffnung (16) mit der Überwachungseinheit (30) des Strahlbearbeitungskopfes, wobei das erste Ermittlungsmodul der Überwachungseinheit (30) mindestens eine Position (180; 182) der Austrittsöffnung (16) in dem mindestens einen Bild ermittelt,
das zweite Ermittlungsmodul der Überwachungseinheit (30) mindestens eine Position (170) des Zentrums der emittierten elektromagnetischen Strahlung (17) in dem mindestens einen Bild ermittelt, und
das dritte Ermittlungsmodul der Überwachungseinheit (30) die Positionsbeziehung zwischen der mindestens einen Position (170) des Zentrums der emittierten elektromagnetischen Strahlung (17) und der mindestens einen Position (180, 182) der Austrittsöffnung (16) ermittelt.

10. Verfahren nach Anspruch 9,
wobei das Kontrollmodul der Überwachungseinheit (30) mindestens ein Element ausgibt ausgewählt aus
einem die ermittelte Positionsbeziehung anzeigenden Signal, insbesondere an eine Anzeigeeinheit,
einem Signal, das eine von einer vorbestimmten Positionsbeziehung abweichende, ermittelte Positionsbeziehung anzeigt;
einem Steuerbefehl, insbesondere an eine Steuereinheit, ausgewählt aus einem Befehl zum Fortsetzen der Bearbeitung und einem Befehl zum Beenden der Bearbeitung; und mindestens einem Positionierungsbefehl, insbesondere an die Positionierungseinheit, zum Einstellen der Positionsbeziehung zwischen der mindestens einen Position (170) des Zentrums der emittierten elektromagnetischen Strahlung (17) und der mindestens einen Position (180, 182) der Austrittsöffnung (16) auf eine vorbestimmte Positionsbeziehung.

11. Verfahren nach einem der Ansprüche 9 und 10,
wobei das erste Ermittlungsmodul die mindestens eine Position (180; 182) der Austrittsöffnung (16) in mindestens zwei Richtungen ermittelt; und/oder
wobei das erste Ermittlungsmodul mindestens ein Element ausgewählt aus der mindestens einen Position (180) des die Austrittsöffnung (16) begrenzenden Öffnungsrands (18) und der Position (182) eines Zentrums der Austrittsöffnung (16) ermittelt.

12. Verfahren nach einem der Ansprüche 9 bis 11,
wobei das zweite Ermittlungsmodul die mindestens eine Position (170) des Zentrums der emittierten elektromagnetischen Strahlung (17) in mindestens zwei Richtungen ermittelt; und/oder
wobei das zweite Ermittlungsmodul mindestens ein Element ausgewählt aus der Position eines räumlichen Zentrums der emittierten Strahlung (17) und der Position eines Zentrums der höchsten Energiedichte der emittierten Strahlung (17) als die Position (170) des Zentrums der emittierten elektromagnetischen Strahlung (17) ermittelt.

13. Verfahren nach einem der Ansprüche 9 bis 12, mit
kontinuierliches oder diskontinuierliches Einstellen der Positionsbeziehung zwischen der mindestens einen Position (170) des Zentrums der emittierten elektromagnetischen Strahlung (17) und der mindestens einen Position(180; 182) der Austrittsöffnung (16), insbesondere auf eine vorbestimmte Positionsbeziehung, insbesondere mittels der Positionierungseinheit;
und/oder
Kalibrieren des Abbildungsmaßstabs des mindestens einen Bildes; und/oder Korrigieren mindestens einer Perspektive des mindestens eines Bildes und/oder unterschiedlicher Perspektiven der mindestens einen Position (180, 182) der Austrittsöffnung (16) und der mindestens einen Position (170) des Zentrums der emittierten elektromagnetischen Strahlung (17), insbesondere mittels dem dritten Ermittlungsmodul und/oder dem Kontrollmodul.

14. Verfahren nach einem der Ansprüche 9 bis 13,
wobei die optische Detektoreinheit (30) mindestens ein Bild zumindest eines Teils einer vom Werkstück koaxial durch die Austrittsöffnung (16) in den Strahlbearbeitungskopf (10; 100; 200) emittierten elektromagnetischen Strahlung (17) aufnimmt, insbesondere koaxial in Bezug auf die Ausbreitungsrichtung des Bearbeitungsenergiestrahls (14; 14, 206) durch die Austrittsöffnung (16); und/oder
wobei das Werkstück durch die Austrittsöffnung (16) koaxial oder nicht koaxial zu dem Bearbeitungsenergiestrahl kontinuierlich, diskontinuierlich und/oder stroboskopisch beleuchtet wird, insbesondere mit der Beleuchtungseinheit (102); und/oder wobei zwei oder mehr Bilder alternierend, insbesondere periodisch alternierend, mit Beleuchtung und ohne Beleuchtung aufgenommen werden.

15. Computerprogrammprodukt, umfassend ein oder mehrere Programmmodule, die bewirken, dass der Strahlbearbeitungskopf (10; 100; 200) nach einem der Ansprüche 1 bis 6 oder die Strahlbearbeitungsvorrichtung nach Anspruch 7 Schritte des Verfahrens nach einem der Ansprüche 9 bis 14 ausführt, insbesondere wenn die Programmmodule in einen Speicher der Überwachungseinheit (30) geladen werden, insbesondere umfassend mindestens ein Element ausgewählt aus dem ersten Ermittlungsmodul, dem zweiten Ermittlungsmodul, dem dritten Ermittlungsmodul, dem Kontrollmodul und einer Kombination davon.

16. Computerlesbares Medium, auf dem ein oder mehrere Programmmodule gespeichert sind, die von der Überwachungseinheit (30) des Strahlbearbeitungskopfes (10; 100; 200) nach einem der Ansprüche 1 bis 6 oder der Strahlbearbeitungsvorrichtung nach Anspruch 7 lesbar und ausführbar sind, um Schritte des Verfahrens nach einem der Ansprüche 9 bis 14 auszuführen, insbesondere wenn die Programmmodule in einen Speicher der Überwachungseinheit (30) geladen werden, insbesondere mindestens ein Element ausgewählt aus dem ersten Ermittlungsmodul, dem zweiten Ermittlungsmodul, dem dritten Ermittlungsmodul, dem Kontrollmodul und einer Kombination davon.
